# EUROPÄISCHE PATENTSCHRIFT

(11) **EP 1 365 943 B1**
(45) Veröffentlichungstag und Bekanntmachung des Hinweises auf die Patenterteilung: **15.03.2006**
(21) Anmeldenummer: 01990364.0
(22) Anmeldetag: 21.12.2001
(51) Int. Cl.: B60R 16/02

(54) **VERFAHREN UND KOMMUNIKATIONSSYSTEM ZUM DATENAUSTAUSCH ZWISCHEN TEILNEHMERN EINES BUSSYSTEMS**
METHOD AND COMMUNICATION SYSTEM FOR EXCHANGING DATA BETWEEN USERS OF A BUS SYSTEM
PROCEDE ET SYSTEME DE COMMUNICATION DESTINES A L'ECHANGE DE DONNEES ENTRE LES ABONNES D'UN SYSTEME A BUS

(30) Priorität: 28.12.2000 DE 10065113
(43) Veröffentlichungstag der Anmeldung: 03.12.2003
(73) Patentinhaber: ROBERT BOSCH GMBH, 70442 Stuttgart (DE)
(72) Erfinder: FUEHRER, Thomas, 70839 Gerlingen (DE); MUELLER, Bernd, 71229 Leonberg (DE)
(86) Internationale Anmeldenummer: PCT/DE2001/004853
(87) Internationale Veröffentlichungsnummer: WO 2002/054252

(56) Entgegenhaltungen:
- DE-A- 19 847 045
- US-A- 4 295 122
- M.A. LIVANI, J. KAISER, W.J. JIA: "Scheduling Hard and Soft Real-Time Communication in the Controller Area Network" [Online] 1998 , 23RD IFAC/IFIP WORKSHOP ON REAL TIME PROGRAMMING23RD IFAC/IFIP WORKSHOP ON REAL TIME PROGRAMMING XP002235284 Gefunden im Internet: <URL: http://www.informatik.uni-ulm.de/rs/projek te/core/> [gefunden am 2003-03-19] Absatz [0004]
- M.A. LIVANI, J. KAISER: "EDF Consensus on CAN Bus Access for Dynamic Real-Time Applications" JOS¹ ROLIM (ED.): LECTURE NOTES IN COMPUTER SCIENCE, [Online] Nr. 1388, 1998, Seiten 1088-1097, XP002235283 Gefunden im Internet: <URL:http://www.informatik.uni-ulm.de/rs/p rojekte/core/> [gefunden am 2003-03-19]

## Beschreibung

Die vorliegende Erfindung betrifft ein Verfahren und ein Kommunikationssystem zum Austausch von Daten zwischen mindestens zwei Teilnehmern, die mittels eines Bussystems miteinander in Verbindung stehen. Die Daten sind in Nachrichten enthalten, die von den Teilnehmern über das Bussystem übertragen werden. Jeder Nachricht ist eine vorgebbare Priorität zugeordnet.

Die Erfindung betrifft außerdem ein Bussystem zum Austausch von Daten zwischen mindestens zwei Teilnehmern eines Kommunikationssystems.

Des Weiteren betrifft die vorliegende Erfindung ein Speicherelement für einen Teilnehmer eines Kommunikationssystems, der über ein Bussystem zum Austausch von Daten mit mindestens einem weiteren Teilnehmer in Verbindung steht. Auf dem Speicherelement ist ein Computerprogramm abgespeichert, das auf einem Rechengerät des Teilnehmers, insbesondere auf einem Mikroprozessor ablauffähig ist. Das Speicherelement ist bspw. als ein Read-Only-Memory, als ein Random-Access-Memory oder als ein Flash-Memory ausgebildet.

### Stand der Technik

Die Vernetzung von Steuergeräten, Sensoren und Aktoren mit Hilfe eines Kommunikationssystems hat in den letzten Jahren bei der Herstellung von Kraftfahrzeugen stark zugenommen. Dabei steht im Vordergrund, Synergieeffekte durch Verteilung von Funktionen auf mehrere Steuergeräte zu erzielen. In diesem Zusammenhang spricht man auch von verteilten Systemen. Die Kommunikation zwischen den verschiedenen Teilnehmern (Steuergeräte, Sensoren und Aktoren) des Kommunikationssystems findet in zunehmendem Maße über ein Bussystem statt. Der Kommunikationsverkehr auf dem Bussystem, Zugriffsmechanismen und Empfangsmechanismen sowie Fehlerbehandlung werden über ein Protokoll geregelt.

Im Kraftfahrzeugbereich hat sich das sog. Controller Area Network (CAN)-Protokoll etabliert. Dieses ist ein ereignisgesteuertes Protokoll, d. h. Protokollaktivitäten wie das Senden einer Nachricht werden durch Ereignisse initiiert, die ihren Ursprung außerhalb des Kommunikationssystems haben. Der eindeutige Zugang zu dem Kommunikationssystem wird über eine prioritätsbasierte Bitarbitrierung gelöst. Eine Voraussetzung dafür ist, dass jeder Nachricht eine eindeutige Priorität zugewiesen ist. Das CAN-Protokoll ist sehr flexibel, ein Hinzufügen weiterer Teilnehmer und Nachrichten ist problemlos möglich, solange noch freie Prioritäten (Message Identifier) vorhanden sind.

In dem Fall, dass die durchschnittliche Auslastung des Bussystems relativ niedrig ist, ist die Wahrscheinlichkeit, dass ein Teilnehmer, der zu senden wünscht, seine Nachricht sofort oder innerhalb einer sehr kurzen Latenzzeit auch tatsächlich senden kann, sehr groß. Da CAN-Bussysteme typischerweise so ausgelegt sind, dass die mittlere Auslastung des Bussystems klein genug ist, bedeutet dies, dass im Regelfall ein sehr schneller Zugriff auf das Bussystem gegeben ist. Der Worst-Case aus Sicht des Kommunikationssystems, dass nämlich alle Teilnehmer permanent senden wollen, erzeugt jedoch streng genommen eine unendlich lange Latenzzeit, zumindest für diejenigen Nachrichten, deren Priorität relativ niedrig ist. Daher ist ein Kommunikationssystem mit einem CAN-Bussystem sehr gut für den Regelfall (sehr hohe Wahrscheinlichkeiten für kurze Latenzzeiten), aber weniger gut für den Worst-Case (kleine, endliche Wahrscheinlichkeiten für sehr große Latenzzeiten) geeignet.

Ein weiteres aus dem Stand der Technik bekanntes Protokoll ist das sog. Time Triggered Protocol for Class C (TTP/C), das ein rein zeitgesteuertes, also deterministisches, Protokoll ist, bei dem die Redundanz fest in dem Protokoll vorgegeben ist. Alle Kommunikationsaktivitäten auf dem Bussystem sind strikt periodisch. Protokollaktivitäten wie das Senden einer Nachricht werden nur durch das Fortschreiten einer (globalen) Zeit ausgelöst. Der Zugang zu dem Kommunikationssystem basiert auf der Zuteilung von Zeitbereichen, in denen ein Teilnehmer exclusives Senderecht hat. Das Protokoll ist vergleichsweise unflexibel, ein Hinzufügen von neuen Teilnehmern ist nur dann möglich, wenn zuvor schon die entsprechenden Zeitbereiche freigelassen wurden. Die Wahrscheinlichkeit, dass ein Teilnehmer Zugang zu dem Bussystem erhält, wenn er dies wünscht, ist unabhängig von der vorhandenen Auslastung des Bussystems. Die Latenzzeit hängt nur von der zeitlichen Entfernung zum nächsten Sendezeitpunkt ab. Da der Zugangswunsch eines Teilnehmers außerhalb des Einflusses des Kommunikationssystems entsteht (asynchron zu diesem ist), ist die Latenzzeit zwischen Zugangswunsch und Sendeberechtigung gleich verteilt über das ganze Zeitintervall zwischen zwei Sendezeitpunkten. Diese Wahrscheinlichkeitsverteilung ist sehr viel breiter als bei dem CAN-Protokoll, d. h. die Wahrscheinlichkeit, nach einer sehr kurzen Zeit Zugriff auf das Bussystem zu erhalten, ist deutlich geringer. Dafür ist diese Verteilung lokalisiert, die Wahrscheinlichkeit für sehr große Latenzzeiten ist Null. Der Regelfall und der Worst-Case sind gleich und es kann im Gegensatz zu dem CAN-Protokoll eine obere Schranke für die maximale Latenzzeit angegeben werden. Damit ist das TTP/C-Protokoll geeignet für Applikationen, in denen der Worst-Case toleriert werden muss, selbst wenn man damit für den Regelfall (geringe) Einschränkungen hinnehmen muss. Insbesondere Applikationen in sicherheitsrelevanten Bereichen (z. B. Steer-by-Wire, Brake-by-Wire oder allgemein X-by-Wire in Kraftfahrzeugen) oder Anwendungen, bei denen der Unterschied zwischen Regelfall und Worst-Case nicht groß ist, sind bevorzugte Einsatzbereiche für das zeitgesteuerte TTP/C-Protokoll.

Aus dem Stand der Technik ist des Weiteren eine Möglichkeit bekannt, ein zeitgesteuertes Protokoll flexibler zu gestalten. Dabei arbeitet das gesamte Protokoll zeitgesteuert, bestimmte Zeitbereiche sind jedoch für eine ereignisgesteuerte Nachrichtenübertragung reserviert. Je nachdem, wie der Zugriff innerhalb der ereignisgesteuerten Zeitbereiche geregelt ist, kann die Behandlung des Regelfalls und applikationsspezifischer Einzelfälle verbessert werden, ohne dass die prinzipielle Behandelbarkeit des Worst-Case verloren geht. Die prinzipielle Ausrichtung eines solchen Kommunikationssystems ist eine zeitgesteuerte, die Ereignissteuerung verläuft innerhalb der Zeitsteuerung in den reservierten Zeitbereichen ab. Ein Bussystem, das auf diese Weise arbeitet, ist der sog. Byte Flight-Bus oder der SI-Bus.

Die vorliegende Erfindung betrifft sowohl ein ereignisgesteuertes als auch ein deterministisch gesteuertes Bussystem. Ebenso sind Bussysteme mit umfasst, die eine Kombination eines ereignisgesteuerten und eines deterministischen Bussystems darstellen.

Im Stand der Technik, als dem Hatada- Dokument US 4,295,122 gemäß Textstellen in Spalte 1, Zeile 34 - 43, Spalte2, Zeile 15 - 50 und Spalte 3, Zeile 37 - 66 wird lediglich die höchste Priorität von allen anderen Buskonten abgezogen, woraus sich dann eine neue Sendeberechtigung ergibt und zwar im Rahmen des Überlaufs der binären Darstellung was aber eine vergleichbare Steuerung gemäß der dezidierten Prioritätsvergabe unserer Erfindung nicht erlaubt.

Im Gegensatz zum Stand der Technik soll ein verfeinerter Prioritätsshift möglich gemacht werden, der insbesondere im Rahmen der zyklischen Vergabe der Zugangsberechtigung insbesondere im Hinblick auf Latenzzeiten eine Optimierung ermöglicht.

Der vorliegenden Erfindung liegt die Aufgabe zugrunde, bei einem Datenaustausch über ein Bussystem eine Möglichkeit zu schaffen, um im Regelfall einen schnellen Zugriff aus das Bussystem zu ermöglichen und im Worst-Case eine endliche Latenzzeit für die zu übertragenden Nachrichten gewährleisten zu können.

Zur Lösung dieser Aufgabe schlägt die Erfindung ausgehend von dem Verfahren zum Datenaustausch der eingangs genannten Art vor, dass die den Nachrichten zugeordneten Prioritäten während des Betriebs des Bussystems dynamisch verändert werden, entsprechend den Merkmalen der unabhängigen Ansprüche.

### Vorteile der Erfindung

Durch die dynamische Veränderung der Prioritäten in einem ereignisgesteuertem Bussystem wird sichergestellt, dass jeder Nachricht eine endliche Latenzzeit garantiert werden kann. Dies geschieht unter Aufrechterhaltung der meisten Flexibilitätsvorteile eines ereignisgesteuerten Kommunikationssystems. Das Kommunikationssystem ist im Rahmen der prinzipiellen Limitierung des betrachteten ereignisgesteuerten Protokolls beliebig erweiterbar, ohne dass schon vorhandene Teilnehmer (aus Sicht des Kommunikationssystems) von der Erweiterung erfahren müssten; dabei wird vorgeschlagen, dass
- die Menge aller Nachrichten in Äquivalenzklassen unterteilt wird; und
- während des Betriebs des Bussystems die Prioritäten der Nachrichten innerhalb der Äquivalenzklasse dynamisch verändert werden.

Die Prioritäten der Nachrichten innerhalb einer Äquivalenzklasse werden vorzugsweise zyklisch verändert. Durch die Veränderung der Prioritäten wird lediglich eine Zugangsberechtigung erzeugt, jedoch nicht erzwungen, dass jeder Teilnehmer seine Sendeberechtigung auch wahrnehmen muss. Dies gestattet eine deutliche Verbesserung des Regelfalls, in dem nicht jeder Teilnehmer immer etwas senden möchte, ohne dass der Worst-Case, bei dem genau dies (jeder Teilnehmer möchte immer etwas senden) der Fall ist, in seiner Behandelbarkeit eingeschränkt ist.

Gemäß einer bevorzugten Ausführungsform der vorliegenden Erfindung wird vorgeschlagen, dass
- die Menge aller Nachrichten in Äquivalenzklassen unterteilt wird;
- jeder Äquivalenzklasse eine Priorität zugeordnet wird, die vorzugsweise der höchsten Priorität einer Nachricht in der Äquivalenzklasse entspricht; und
- während des Betriebs des Bussystems die Prioritäten der Äquivalenzklassen dynamisch verändert werden.

Die Prioritäten der Äquivalenzklassen wechseln sich vorzugsweise nach einem zyklischen Schema ab, das zwar garantiert, dass jede Äquivalenzklasse innerhalb eines Zyklus mindestens einmal eine Sendeberechtigung erhält, nicht jedoch jede Äquivalenzklasse gleich oft.

Vorteilhafterweise wird die Priorität einer Nachricht innerhalb einer Äquivalenzklasse nach dem Senden der Nachricht auf den innerhalb der Äquivalenzklasse niedrigst möglichen Prioritätswert gesetzt. Nachdem eine beliebige Nachricht auf dem Bussystem gesendet wurde, setzt eine dynamische Veränderung der Prioritäten der Nachrichten innerhalb derjenigen Äquivalenzklasse ein, der die gesendete Nachricht zugeordnet ist. Für eine Nachricht bleibt die Priorität innerhalb ihrer Äquivalenzklasse somit unverändert, falls eine Nachricht einer anderen Äquivalenzklasse gesendet wurde. Falls eine Nachricht derselben Äquivalenzklasse gesendet wurde, verändert sich die Priorität der Nachricht innerhalb der Äquivalenzklasse vorzugsweise gemäß dem folgenden Algorithmus:

Die Priorität der nicht gesendeten Nachrichten innerhalb einer Äquivalenzklasse wird nach dem Senden einer Nachricht derselben Äquivalenzklasse um einen Wert erhöht, der ermittelt wird aus einer Anzahl der in der Äquivalenzklasse maximal möglichen Prioritäten minus der Priorität der gesendeten Nachricht plus Eins, wobei das Ergebnis modulo Anzahl der in der Äquivalenzklasse maximal möglichen Prioritäten interpretiert wird. Angenommen, die Prioritäten für k in einer Äquivalenzklasse möglichen Nachrichten seien in absteigender Reihenfolge k, ..., 1. Von den k möglichen Prioritäten werden aktuell nur j s k verwendet, d. h. die Äquivalenzklasse umfasst lediglich j Nachrichten. Bei einer Priorität k-r einer gerade gesendeten Nachricht, wird die Priorität jeder anderen Nachricht in derselben Äquivalenzklasse um den Wert r+1 erhöht und das Ergebnis modulo k interpretiert.

Dieser zyklische Shift der Prioritäten nach dem Senden einer Nachricht derselben Äquivalenzklasse sorgt dafür, dass jede Nachricht entweder zu einem beliebigen Zeitpunkt die höchste Priorität innerhalb der Äquivalenzklasse hat oder bereits vorher gesendet wurde. Nicht alle möglichen Prioritäten müssen auch durch Nachrichten "besetzt" sein. Kein sendender Teilnehmer muss von einem anderen Teilnehmer in seiner Äquivalenzklasse wissen, da der Prioritätsshift nur durch die eigene Priorität und die Priorität der gerade gesendeten Nachricht bestimmt wird.

Alle Nachrichten innerhalb einer Äquivalenzklasse werden gleich behandelt. Bei dem erfindungsgemäßen Verfahren ist die Zeit zwischen zwei aufeinanderfolgenden Sendezeitpunkten einer Nachricht im Worst Case gleich der entsprechenden Zeit in einem zeitgesteuerten Kommunikationssystem, in der Regel jedoch kürzer. Das Hinzufügen von neuen Nachrichten erfolgt problemlos und muss keinem anderen Teilnehmer mitgeteilt werden. Das Gleiche gilt auch für die Veränderung der Länge der über das Bussystem übertragenen Nachrichten. Dies hat jedoch - ebenso wie eine entsprechende Änderung der Struktur in einem zeitgesteuerten Kommunikationssystem - Einfluss auf die Latenzzeiten anderer Nachrichten der betrachteten Äquivalenzklasse im Worst-Case. Dieser Einfluss ist jedoch endlich, berechenbar und selbst im Worst-Case gerade so groß wie der entsprechende Einfluss bei einem zeitgesteuerten Kommunikationssystem. Der Worst-Case und damit ein de facto zeitgesteuertes Verhalten kann erzwungen werden, indem in dem erfindungsgemäßen Verfahren zugrunde liegenden Protokoll Sendepflicht eingeführt wird.

Im Prinzip ist die Zuordnung der Äquivalenzklassen zu bestimmten Äquivalenzklassenprioritäten unabhängig von der Zuordnung der Nachrichten innerhalb einer Äquivalenzklasse zu bestimmten Nachrichtenprioritäten. Aber eine Nachricht, für die eine Latenzzeitgarantie gegeben werden soll, muss in einer Äquivalenzklasse vorkommen, bei der durch den Prioritätsshift sichergestellt ist, dass sie ebenfalls regelmäßig Senderecht erhält. Besonders vorteilhaft ist es, wenn die Priorität der Äquivalenzklassen implizit über die Priorität der in ihr vorkommenden Nachrichten vorgegeben ist. Dies kann z. B. dadurch geschehen, dass die Priorität der Nachrichten in zwei Teile aufgeteilt wird. Der erste Teil der Priorität einer Nachricht charakterisiert die Priorität der Äquivalenzklasse, der die Nachricht zugeordnet ist, ein zweiter Teil gibt die Priorität der Nachricht innerhalb der Äquivalenzklasse an. Der erste, signifikante.Teil einer zweiteiligen Priorität wird also als Äquivalenzklassenpriorität und der zweite Teil der Priorität wird zumindest teilweise als Nachrichtenpriorität interpretiert. Entscheidend ist, dass immer gilt: Eine Nachricht mit einer höheren Äquivalenzklassenpriorität erhält bevorzugtes Senderecht, unabhängig davon, wie die Priorität der Nachricht innerhalb der Äquivalenzklasse ist.

Der oben beschriebene Algorithmus zum Prioritätsshift der Nachrichtenprioritäten hat nur auf den zweiten Teil der Priorität einer Nachricht Einfluss. Nachfolgend wird auf ein Prioritätsshift der Äquivalenzklassen (ÄK)-Prioritäten näher eingegangen.

Dem Prioritätsshift der ÄK-Prioritäten liegt folgendes Schema zugrunde. Voraussetzung ist, dass es n verschiedene Äquivalenzklassen gibt. Wenn man von einer 8-Bit-Länge der Priorität und weiter davon ausgeht, dass in den ersten vier (signifikanten) Bits die Äquivalenzklassenpriorität und in den restlichen vier Bit die Nachrichtenpriorität abgelegt ist, wäre n = 2⁴ = 16. Des Weiteren werden die nachfolgenden Voraussetzungen getroffen:
1. Eine Äguivalenzklassenpriorität ist ein Zahlenpaar (i, j).
2. Eine Äquivalenzklasse kann zu einem Zeitpunkt nur eine Priorität haben. Sie ist entweder (i, 0) oder (0, -i), wobei i = 1, ..., n. Dabei sind die i-Werte in beiden Fällen gleich, d. h. ein Prioritätswechsel einer Äquivalenzklasse kann nur von (i, 0) auf (0, -i) oder umgekehrt erfolgen. Die Äquivalenzklasse wird deshalb mit i bezeichnet.
3. Die Priorität (i, 0) ist höher als jede Priorität (0, -j). Die Priorität (j, 0) ist höher als (i, 0) , falls j > i. (0, -j) ist aber höher als (0, -i), falls j < i.

Die Veränderung der Prioritäten basiert auf vorgebbaren Startwerten. Die Startwerte der Prioritäten müssen für jede Nachricht bekannt sein. Des Weiteren muss ein Reset aller Prioritäten auf die Startwerte erfolgen, sobald der Systembus frei ist, d. h. eine Nachricht nicht auf den Systembus geschrieben wird, obwohl die Zugangsmöglichkeit für die Nachricht vorhanden ist. Dies erlaubt insbesondere eine vergleichsweise einfache Initialisierung.

Gemäß einer anderen vorteilhaften Weiterbildung der vorliegenden Erfindung wird vorgeschlagen, dass während des Betriebs des Bussystems die Prioritäten der Äquivalenzklassen nach dem folgenden Schema dynamisch verändert werden:
- Falls die Priorität einer Äquivalenzklasse (i, 0) ist und die ÄK-Priorität einer gesendeten Nachricht (j, 0) ist, wird die Priorität (i, 0) der Äquivalenzklasse beibehalten, falls j > i ist, und die Priorität der Äquivalenzklasse auf (0, -i) verringert, falls j s 1 ist.
- Falls die Priorität einer Äquivalenzklasse (i, 0) ist und die ÄK-Priorität einer gesendeten Nachricht (0, -j) ist, wird die Priorität der Äquivalenzklasse immer auf (0, -i) verringert.
- Falls die Priorität einer Äquivalenzklasse (0, -i) ist und die ÄK-Priorität einer gesendeten Nachricht (j, 0) ist, wird die Priorität (0, -i) der Äquivalenzklasse beibehalten, falls j > i ist, und die Priorität der Äquivalenzklasse auf (i, 0) erhöht, falls j s i ist.
- Falls die Priorität einer Äquivalenzklasse (0, -i) ist und die ÄK-Priorität einer gesendeten Nachricht (0, -j) ist, wird die Priorität (0, -i) der Äquivalenzklasse beibehalten, falls j ≥ i ist, und die Priorität der Äquivalenzklasse auf (i, 0) erhöht, falls j < i ist.
- Die Priorität einer Äquivalenzklasse wird auf (i, 0) festgesetzt, falls keine Nachricht gesendet wird, obwohl der Systembus frei ist.

Gemäß der Enfindung wird also vorgeschlagen, dass die Priorität einer Äquivalenzklasse verringert wird, falls eine Nachricht der Äquivalenzklasse gesendet wurde oder hätte gesendet werden können. Die Priorität einer Äquivalenzklasse wird beibehalten, falls eine Nachricht der Äquivalenzklasse nicht hätte gesendet werden können, unabhängig davon, ob die Priorität der Äquivalenzklasse hoch oder tief war. Die Priorität einer Äquivalenzklasse wird hochgesetzt, falls eine Nachricht der Äquivalenzklasse nur dann hätte gesendet werden können, wenn die Äquivalenzklasse die hohe Priorität gehabt hätte.

Wenn alle Teilnehmer immer senden wollen, ergibt sich nach kurzer Zeit (spätestens nachdem die niedrigste Äquivalenzklasse einmal gesendet hat) auf der Äquivalenzklassen-Ebene ein periodisches Muster. Dieses Muster hat immer die Form n, n-1, n, n-2, n, n-1, n, n-3, .... Die Periode der höchsten Äquivalenzklasse mit der Nummer n ist 2. Die Periode der zweithöchsten Äquivalenzklasse ist 4. Die der (n-i)-ten Äquivalenzklasse ist 2ⁱ⁺¹, ... und die Periode der letzten beiden Äquivalenzklassen (2 und 1), 2ⁿ⁻¹ und 2ⁿ. Die Perioden sind immer als Anzahl von Nachrichten angegeben. Damit erhalten alle Äquivalenzklassen periodisch Zugriff auf das Bussystem.

Auf Nachrichtenebene liegt dann ebenfalls ein strikt periodisches Sendemuster vor. Innerhalb einer Äquivalenzklasse verläuft dann alles zyklisch, und insgesamt ergibt sich für eine Nachricht die Periode (Periode der Äquivalenzklasse) x (Anzahl der Nachrichten in der Äquivalenzklasse).

Anhand dieses Zusammenhangs kann man zu Veränderungen der Struktur des Kommunikationssystems, insbesondere für Erweiterungen, die sich für die geänderte Struktur ergebenden neuen Perioden berechnen. Ein Einfluss von Veränderungen in anderen Äquivalenzklassen ist nur dann vorhanden, wenn eine Äquivalenzklasse mit einer höheren Priorität neu gegründet oder aufgelöst wird, wenn alle Äquivalenzklassen mit einer niedrigeren Priorität aufgelöst werden oder, nur für die Äquivalenzklasse mit der niedrigsten Priorität, wenn eine neue Äquivalenzklasse mit einer noch niedrigeren Äquivalenzklasse eingeführt wird. Auf zeitlicher Ebene können zusätzliche kleine Schwankungen hinzukommen, die durch unterschiedliche Nachrichtenlängen verursacht werden. Am deterministischen Ablauf der Reihenfolge ändert dies allerdings nichts.

Demgemäß wird vorgeschlagen, die Priorität einer Äquivalenzklasse, aus der eine Nachricht gesendet wurde, nach dem Senden der Nachricht auf den niedrigst möglichen Prioritätswert zu setzen. Des Weiteren wird vorgeschlagen, dass die Prioritäten der Äquivalenzklassen, aus denen keine Nachricht gesendet wurde, nach dem Senden einer Nachricht um einen Wert erhöht werden, der ermittelt wird aus einer Anzahl der in der Äquivalenzklasse maximal möglichen Prioritäten minus der Priorität der gesendeten Nachricht plus Eins, wobei das Ergebnis modulo Anzahl der in der Äquivalenzklasse maximal möglichen Prioritäten interpretiert wird.

Mit dem erfindungsgemäßen Verfahren kann eine Garantie für die Latenzzeiten der einzelnen Nachrichten gegeben werden, ohne dass auf die Vorteile einer Ereignissteuerung verzichtet werden muss.

Die Zusammensetzbarkeit (Composability) des Kommunikationssystems deutlich besser als bei einem rein ereignisgesteuerten Kommunkationssystem, da Änderungen in anderen Äquivalenzklassen die eigene (Worst-Case) Sendefrequenz nicht beeinflussen und Änderungen innerhalb der Äquivalenzklasse nur begrenzte und berechenbare Veränderungen der Latenzzeiten im Worst-Case erzeugen.

Als eine weitere Lösung der Aufgabe der vorliegenden Erfindung wird ausgehend von dem Kommunikationssystem der eingangs genannten Art vorgeschlagen, dass das Kommunikationssystem Mittel zur dynamischen Veränderung der den Nachrichten zugeordneten Prioritäten während des Betriebs des Bussystems aufweist.

Gemäß einer vorteilhaften Weiterbildung der vorliegenden Erfindung wird vorgeschlagen, dass das Kommunikationssystem Mittel zur Ausführung des erfindungsgemäßen Verfahrens aufweist.

Bei dem erfindungsgemäßen Kommunikationssystem bleibt die Flexibilität eines ereignisgesteuerten Kommunikationssystems komplett erhalten. Die Erweiterbarkeit des erfindungsgemäßen Kommunikationssystems ist ebenso gut wie bei einem rein ereignisgesteuerten System. Nachrichtenlängen können verändert werden und neue Nachrichten können problemlos hinzugefügt oder entfernt werden, ohne dass dies einem Kommunikationscontroller eines Teilnehmers mitgeteilt werden müsste.

Das Kommunikationssystem hat ein sehr gutes Verhalten im Regelfall, in der Regel ein wesentlich besseres Verhalten als ein rein zeitgesteuertes System. Es lassen sich nahezu beliebige zeitgesteuerte Kommunikationssysteme nachbilden.

Die Zuteilung der Nachrichten auf die verschiedenen Teilnehmer des Kommunikationssystems ist flexibel. Des Weiteren sind nur sehr geringe Hardwaremodifikationen notwendig. Zur Generierung der dynamischen Prioritäten können standardisierte, sehr einfache und kostengünstige Hardwarebausteine eingesetzt werden. Das Gleiche gilt für eine eventuelle Sendepflicht. Der Zugang zu dem Bussystem erfolgt nach wie vor über die Prioritäten. Es ist eine hundertprozentige Auslastung des Bussystems möglich. Eine Initialisierung des erfindungsgemäßen Kommunikationssystems über ein ereignisgesteuertes Protokoll ist sehr viel unproblematischer als bei einem zeitgesteuerten Protokoll.

Als noch eine weitere Lösung der Aufgabe der vorliegenden Erfindung wird ausgehend von dem Bussystem der eingangs genannten Art vorgeschlagen, dass mit dem Bussystem das erfindungsgemäße Verfahren ausgeführt wird.

Von besonderer Bedeutung ist die Realisierung des erfindungsgemäßen Verfahrens in der Form eines Speicherelements, das für einen Teilnehmer eines Kommunikationssystems, der über ein Bussystem zum Austausch von Daten mit mindestens einem weiteren Teilnehmer in Verbindung steht, vorgesehen ist. Dabei ist auf dem Speicherelement ein Computerprogramm abgespeichert, das auf einem Rechengerät des Teilnehmers, insbesondere auf einem Mikroprozessor, ablauffähig und zur Ausführung des erfindungsgemäßen Verfahrens geeignet ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren, zu dessen Ausführung das Computerprogramm geeignet ist. Als Speicherelement kann insbesondere ein elektrisches Speichermedium zur Anwendung kommen, bspw. ein Read-Only-Memory, ein Random-Access-Memory oder ein Flash-Memory.

Die Erfindung betrifft schließlich auch ein Computerprogramm, das zur Ausführung des erfindungsgemäßen Verfahrens geeignet ist, wenn es auf einem Rechengerät, insbesondere einem Mikroprozessor, eines Teilnehmers eines Kommunikationssystems, der über ein Bussystem zum Austausch von Daten mit mindestens einem weiteren Teilnehmer in Verbindung steht, abläuft. Besonders bevorzugt ist dabei, wenn das Computerprogramm auf einem Speicherelement, insbesondere auf einem Flash-Memory, abgespeichert ist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein erfindungsgemäßes Kommunikationssystem gemäß einer bevorzugten Ausführungsform;
- Figur 2: eine Wahrscheinlichkeitsverteilung der Latenzzeiten in einem ereignisgesteuerten Kommunikationssystem;
- Figur 3: eine Wahrscheinlichkeitsverteilung der Latenzzeiten in einem deterministischen Kommunikationssystem;
- Figur 4: eine Wahrscheinlichkeitsverteilung der Latenzzeiten in einem erfindungsgemäßen Kommunikationssystem;
- Figur 5: ein Ablaufdiagramm eines erfindungsgemäßen Verfahrens gemäß einer bevorzugten Ausführungsform zur dynamischen Veränderung der Prioritäten von Äquivalenzklassen; und
- Figur 6: ein Ablaufdiagramm eines erfindungsgemäßen Verfahrens gemäß einer bevorzugten Ausführungsform zur dynamischen Veränderung der Prioritäten von Nachrichten innerhalb einer Äquivalenzklasse.

### Beschreibung der Ausführungsbeispiele

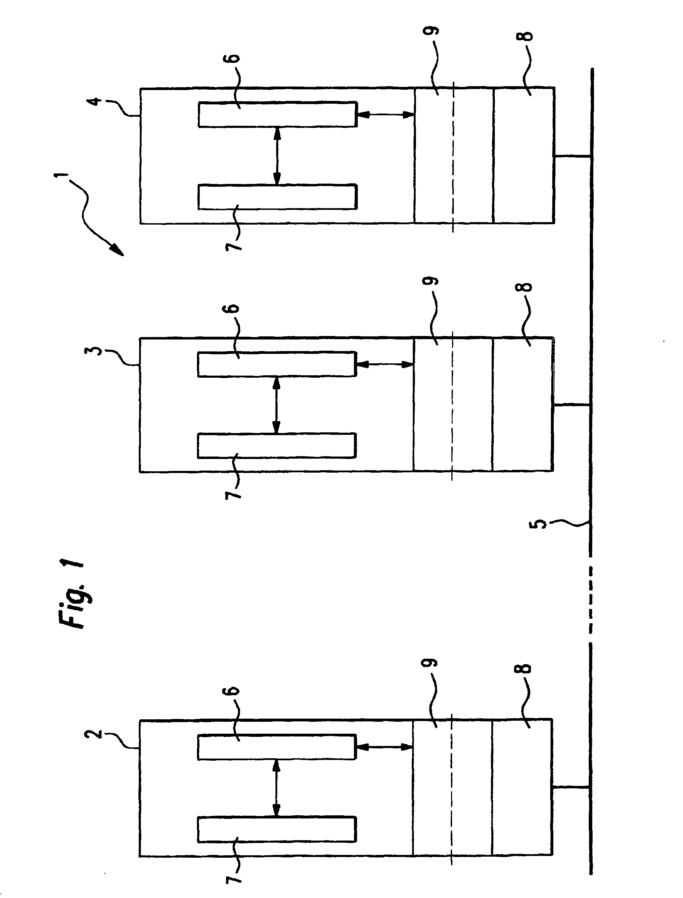

In Fig. 1 ist ein erfindungsgemäßes Kommunikationssystem in seiner Gesamtheit mit dem Bezugszeichen 1 bezeichnet. Das Kommunikationssystem 1 umfasst mehrere Teilnehmer 2, 3, 4, die mittels eines verteilt arbeitenden Bussystems 5 zum Austausch von Daten miteinander in Verbindung stehen. Die Teilnehmer 2, 3, 4 sind bspw. Steuergeräte eines Kraftfahrzeugs. Die auszutauschenden Daten sind in Nachrichten enthalten, die von den Teilnehmern 2, 3, 4 über das Bussystem 5 übertragen werden. Jeder Nachricht ist eine vorgebbare Priorität zugeordnet.

Die Teilnehmer 2, 3, 4 umfassen ein Rechengerät (sog. Prozessrechner), der als ein Mikroprozessor 6 ausgebildet ist. Auf dem Mikroprozessor 6 ist ein Computerprogramm ablauffähig, das in einem als ein Flash-Memory ausgebildeten Speicherelement 7, abgespeichert ist. Das Computerprogramm ist zur Ausführung des erfindungsgemäßen Verfahrens geeignet. Das Computerprogramm wird vor oder während der Abarbeitung in den Mikroprozessor 6 geladen. Die Teilnehmer 2, 3, 4 umfassen außerdem einen Kommunikationscontroller 8, der über eine Schnittstelle 9 mit dem Mikroprozessor 6 in Verbindung steht. Der Kommunikationscontroller 8 stellt eine Verbindung zwischen dem Teilnehmer 2, 3, 4 und dem Bussystem 5 her.

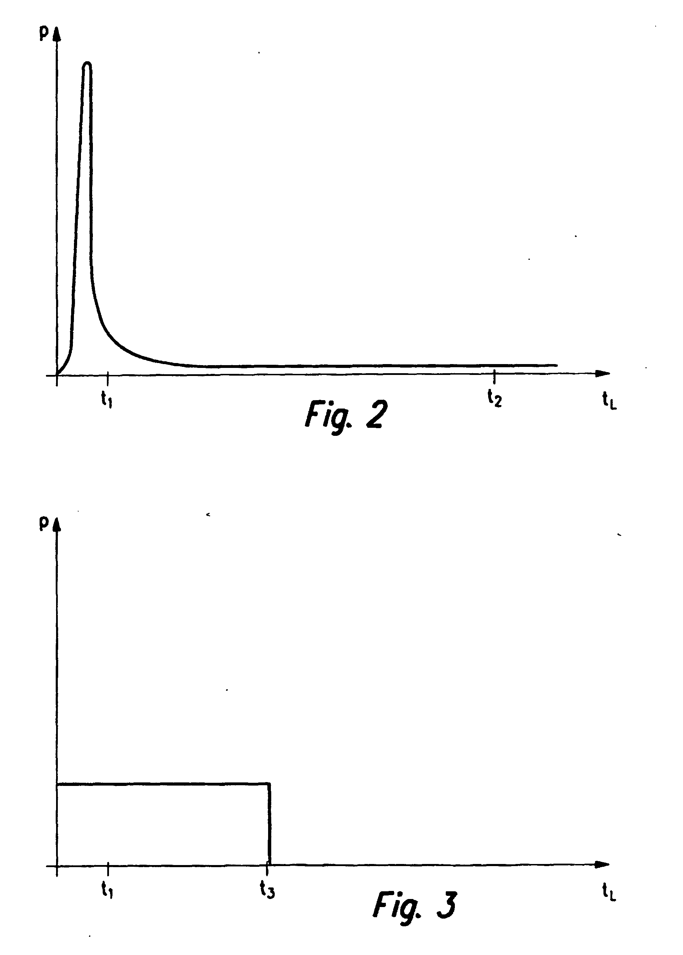

Für Bussysteme lässt sich eine Wahrscheinlichkeit p dafür angeben, dass beim Senden von Nachrichten eine bestimmte Latenzzeit t nicht überschritten wird. Als Latenzzeit t wird die Zeit bezeichnet, die zwischen einem Zugangswunsch eines Teilnehmers und seiner Sendeberechtigung verstreicht. In Fig. 2 ist eine Wahrscheinlickeitsverteilung der Latenzzeit t für ein ereignisgesteuertes Kommunikationssystem dargestellt. Es ist deutlich zu erkennen, dass die Wahrscheinlichkeitsverteilung einen relativ scharfen Peek in der Nähe von 0 hat. Das bedeutet, dass die Wahrscheinlichkeit p für eine sehr kleine Latenzzeit t kleiner t₁ sehr groß ist. Die Wahrscheinlichkeitsverteilung erstreckt sich jedoch bis ins Unendliche, was bedeutet, dass keine maximale Latenzzeit t für die zu übertragenden Nachrichten gewährleistet werden kann. Die Verteilung aus Fig. 2 zeigt, dass ein ereignisorientiertes Kommunikationssystem sehr gut für den Regelfall (sehr große Wahrscheinlichkeiten für kurze Latenzzeiten), aber weniger gut für den Worst-Case geeignet ist. Dies kann noch dadurch verschärft werden, wenn ein Fehler in einem Teilnehmer vorliegt, der permanent hochpriorisierte Nachrichten sendet und das Bussystem damit blockiert. Infolgedessen können Nachrichten mit einer niedrigeren Priorität nicht über das Bussystem übertragen werden. Die niederpriorisierten Nachrichten haben dann eine unendlich lange Latenzzeit. Ein ereignisorientiertes Bussystem ist bspw. das Controller Area Network (CAN)-Bussystem.

In Fig. 3 ist eine Wahrscheinlichkeitsverteilung der Latenzzeiten t für ein deterministisches, insbesondere ein zeitgesteuertes, Kommunikationssystem dargestellt. Es ist deutlich zu erkennen, dass die Wahrscheinlichkeit p, dass ein Teilnehmer Zugang zu dem Bussystem erhält und eine Nachricht übertragen darf, wenn er es wünscht, unabhängig ist von der vorhandenen Auslastung des Bussystems. Die Latenzzeiten t hängen nur von der zeitlichen Entfernung zum nächsten Sendezeitpunkt ab. Da der Zugangswunsch eines Teilnehmers außerhalb des Einflusses des Kommunikationssystems entsteht, in der Regel asynchron zu diesem ist, ist die Latenzzeit t zwischen Zugangswunsch und Sendeberechtigung gleich verteilt über das ganze zeitliche Intervall zwischen zwei Sendezeitpunkten. Diese Verteilung ist sehr viel breiter als bei einem ereignisorientierten Bussystem, d. h. die Wahrscheinlichkeit p, nach einer sehr kurzen Zeit t kleiner t₁ Zugriff auf das Bussystem zu erhalten, ist deutlich geringer. Die Wahrscheinlichkeitsverteilung ist jedoch lokalisiert, d. h. die Wahrscheinlichkeit p für eine beliebig große Latenzzeit ist 0. Im Regelfall und im Worst-Case sind die Wahrscheinlichkeiten p gleich und es kann - im Gegensatz zu einem ereignisorientierten Kommunikationssystem - eine obere Schranke t₃ für die maximale Latenzzeit angegeben werden. Damit sind deterministische Kommunikationssysteme geeignet für Appliakationen, in denen der Worst-Case toleriert werden muss, selbst wenn man damit für den Regelfall Einschränkungen hinnehmen muss. Inbesondere Applikationen in sicherheitsrelevanten Bereichen (X-by-Wire-Systeme) oder Anwendungen, in denen der Unterschied zwischen Regelfall und Worst-Case nicht groß ist, sind daher bevorzugte Einsatzbereiche für deterministisch gesteuerte Protokolle. Ein Beispiel für ein rein zeitgesteuertes Protokoll ist das Time-Triggered-Protocol for Class C (TTP/C).

Um bei einem Datenaustausch über ein Bussystem einerseits im Regelfall eine hohe Wahrscheinlichkeit für kurze Latenzzeiten und andererseits im Worst-Case eine maximale Latenzzeit gewährleisten zu können, schlägt die vorliegende Erfindung vor, dass die den einzelnen Nachrichten zugeordneten Prioritäten während des Betriebs des Bussystems 5 dynamisch verändert werden.

Die Menge aller in dem Kommunkationssystem 1 zu übertragenden Nachrichten wird in Äquivalenzklassen unterteilt. Jeder Äquivalenzklasse wird eine Priorität zugeordnet. Die Priorität einer Äquivalenzklasse entspricht vorzugsweise der höchsten Priorität einer Nachricht in der Äquivalenzklasse. Während des Betriebs des Bussystems 5 werden die Prioritäten der Nachrichten innerhalb einer Äquivalenzklasse dynamisch verändert.

Zur Verdeutlichung des Prioritätsshift innerhalb einer Äquivalenzklasse wird ein Beispiel betrachtet. Dabei wird von einer Äquivalenzklasse ausgegangen, in der es k = 16 maximal mögliche Prioritäten gibt. In der Äquivalenzklasse sind j = 4 Nachrichten untergebracht. Zu Beginn des erfindungsgemäßen Verfahrens sind den einzelnen Nachrichten n₁, n₂, n₃, n₄ der betrachtenen Äquivalenzklasse die Prioritäten gemäß Tabelle 1 zugeordnet.

**Tabelle 1 Startwerte der Prioritäten**

| | | | | |
|---|---|---|---|---|
| Priorität | 13 | 7 | 3 | 2 |
| Nachricht | n₁ | n₂ | n₃ | n₄ |

Zum nächstmöglichen Sendezeitpunkt der betrachteten Äquivalenzklasse wird die Nachricht n₁ mit der höchsten Priorität 13 gesendet. Nach dem Senden einer Nachricht der betrachteten Äquivalenzklasse werden die Prioritäten der Nachrichten n₁, n₂, n₃, n₄ dieser Äquivalenzklasse verändert. Die Priorität der gesendeten Nachricht n₁ wird auf den niedrigstmöglichen Prioritätswert innerhalb der Äquivalenzklasse, nämlich 1, gesetzt. Die Priorität k-r der gesendeten Nachricht n₁ ist 13. Somit gilt für r = k-13 = 16-13 = 3. Die Prioritäten der übrigen nicht gesendeten Nachrichten in der Äquivalenzklasse werden um den Wert r+1 erhöht und das Ergebnis modulo k interpretiert. Somit verändern sich die Prioritäten der Nachrichten innerhalb der betrachteten Äquivalenzklasse wie in Tabelle 2 aufgeführt.

**Tabelle 2 Prioritätswerte nach dem ersten Schritt**

| | | | | |
|---|---|---|---|---|
| Priorität (alt) | 7 | 3 | 2 | 13 |
| Priorität (neu) | 11 | 7 | 6 | 1 |
| Nachricht | n₂ | n₃ | n₄ | n₁ |

Die Nachricht n₁ hat die Priorität 1, da der alte Prioritätswert 13 erhöht um 4 im Ergebnis 17 ergibt und 17 modulo k = 17 modulo 16 im Ergebnis 1 ergibt.

Bei einem darauffolgenden Sendezeitpunkt der Äquivalenzklasse verzichtet die Nachricht n₂ auf das Senden und die Nachricht n₃ wird mit der Priorität k-r = 7 gesendet. In dem Algorithmus ist r nun r = k-7 = 16-7 = 9. Die Prioritäten der Nachrichten n₁, n₂, n₃, n₄ der Äquivalenzklassen werden dann wie in Tabelle 3 dargestellt verändert.

**Tabelle 3 Prioritätswerte nach dem zweiten Schritt**

| | | | | |
|---|---|---|---|---|
| Priorität (alt) | 6 | 1 | 11 | 7 |
| Priorität (neu) | 16 | 11 | 5 | 1 |
| Nachricht | n₄ | n₁ | n₂ | n₃ |

Die Prioritäten der Nachrichten n₁, n₂ und n₄ werden um r+1 = 9+1 = 10 erhöht und das Ergebnis modulo k = modulo 16 interpretiert. Die Priorität der gesendeten Nachricht n₃ wird auf den niedrigstmöglichen Prioritätswert innerhalb der Äquivalenzklasse, nämlich 1, gesetzt. Das erfindungsgemäße Verfahen wird wie beschrieben fortgesetzt, so dass sich ein zyklischer Prioritätsshift der Nachrichtenprioritäten innerhalb der Äquivalenzklasse ergibt.

Während des Betriebs des Bussystems 5 werden auch die Prioritäten der Äquivalenzklassen dynamisch verändert. Im Prinzip ist die Priorisierung der Äquivalenzklassen völlig unabhängig von der Priorisierung der Nachrichten innerhalb einer Äquivalenzklasse. Aber eine Nachricht, für die eine Latenzzeitgarantie vorliegt, muss in einer Äquivalenzklasse enthalten sein, bei der durch das Priorisierungsschema garantiert ist, dass die Äquivalenzklasse ebenfalls regelmäßig Senderecht erhält. Besonders vorteilhaft ist es, wenn die Priorität der Äquivalenzklassen implizit über die Priorität der in ihr vorkommenden Nachrichten gegeben ist. Dies kann bspw. dadurch realisiert werden, dass die Priorität zweigeteilt ist, wobei in einem ersten (signifikanten) Teil der Priorität die Äquivalenzklassen - (ÄK)-Priorität und in einem zweiten Teil der Priorität die Nachrichtenpriorität innerhalb der Äquivalenzklasse enthalten ist. Dabei gilt immer: Eine Nachricht mit höherer ÄK-Priorität erhält bevorzugtes Senderecht, unabhängig davon, wie die Nachrichtenpriorität innerhalb der Äquivalenzklasse ist.

Für den dynamischen Prioritätsshift der ÄK-Prioritäten wird das nachfolgende Schema vorgeschlagen. Es wird davon ausgegangen, dass es in dem Kommunikationssystem n verschiedene Äquivalenzklassen gibt. Die Priorität ist in einem Datenwort mit 8 Bit Länge dargestellt, wobei die ersten (signifikanten) vier Bit als ÄK-Priorität und die zweiten vier Bit als Nachrichtenpriorität interpretiert werden. In dem Kommunikationssystem 1 sind somit maximal 2⁴ = 16 Äquivalenzklassen enthalten. Ebenso sind in einer Äquivalenzklasse maximal 2⁴ = 16 Prioritäten enthalten.

Die Priorität einer Nachricht ist ein Paar von Zahlen (i, j). Eine gegebene Äquivalenzklasse kann zu einem Zeitpunkt nur eine ÄK-Priorität haben. Sie ist entweder von der Form (i, 0) oder von der Form (0, -i), wobei i = 1, ..., n. Die i-Werte sind in beiden Fällen gleich groß, d. h. der Prioritätswechsel einer Äquivalenzklasse kann nur von (i = 0) zu (0, -i) sein oder umgekehrt. Die Äquivalenzklasse wird daher mit i bezeichnet. Die Priorität (i, 0) ist höher als jede Priorität (0, -j). Die Priorität (j, 0) ist höher als die Priorität (i, 0), falls j > i. Die Priorität (0, -j) ist aber höher als die Priorität (0, -i), falls j < i.

Zur Erläuterung des Schemas zur Prioritätsmodifikation wird eine Äquivalenzklasse i betrachtet. In jeder Äquivalenzklasse muss lediglich entschieden werden, ob - in Abhängigkeit von der auf dem Bussystem 5 zuletzt übertragenen Nachricht - die eigene Priorität beibehalten werden soll oder nicht. Wenn die Priorität nicht beibehalten werden soll, muss entschieden werden, ob sie verringert oder erhöht werden soll. Die Prioritätsmodifikation kann durchgeführt werden, sobald die Priorität der über das Bussystem 5 übermittelten Nachricht gelesen wurde.

Falls die Priorität der Äquivalenzklasse (i, 0) und die ÄK-Priorität einer gesendeten Nachricht (j, 0) ist, wird die Priorität (i, 0) der Äquivalenzklasse beibehalten, falls j > i ist, und wird die Priorität der Äquivalenzklasse auf (0, -i) verringt, falls j s i ist. Falls die Priorität der Äquivalenzklasse (i, 0) und die ÄK-Priorität der gesendeten Nachricht (0, -j) ist, wird die Priorität der Äquivalenzklasse immer auf (0, -i) verringert. Falls die Priorität der Äquivalenzklasse (0, -i) und die ÄK-Priorität der gesendeten Nachricht (j, 0) ist, wird die Priorität (0, -i) der Äquivalenzklasse beibehalten, falls j > i ist, und wird die Priorität der Äquivalenzklasse auf (i, 0) erhöht, falls j s i ist. Falls die Priorität der Äquivalenzklasse (0, -i) und die ÄK-Priorität der gesendeten Nachricht (0, -j) ist, wird die Priorität (0, -i) der Äquivalenzklasse beibehalten, falls j ≥ i ist, und wird die Priorität der Äquivalenzklasse auf (i, 0) erhöht, falls j < i ist. Falls keine Nachricht gesendet wird, obwohl der Systembus 5 frei ist, wird die Priorität der Äquivalenzklasse auf (i, 0) festgesetzt.

Zusammenfasssend kann gesagt werden, dass die Priorität in der Äquivalenzklasse verringert wird, falls eine Nachricht aus der Äquivalenzklasse gesendet wurde oder hätte gesendet werden können. Die Priorität der Äquivalenzklasse wird beibehalten, falls eine Nachricht aus der Äquivalenzklasse sowieso nicht hätte gesendet werden können, unabhängig von der Priorität der Äquivalenzklasse. Die Priorität der Äquivalenzklasse wird hochgesetzt, falls man hätte senden können, wenn man eine höhere Priorität gehabt hätte.

Im Folgenden wird der Worst-Case für die Äquivalenzklassen-Häufigkeiten betrachtet. Eine Äquivalanzklasse j mit aktueller Priorität (0, -j) kann nach diesem Schema ihre Priorität nur dann auf (j, 0) setzen, wenn eine Äquivalenzklasse mit j < i mindestens einmal zum Senden kommt oder wenn der Systembus 5 frei ist. Wenn man nun eine Äquivalenzklasse k mit einer aktuellen Priorität (k, 0) betrachtet, die senden will, behält diese ihre Priorität bis sie gesendet hat. Die Äquivalenzklasse k+1 kann höchstens einmal vor der Äquivalenzklasse k senden, denn nach dem Sendevorgang hat sie die Priorität (0, -(k+1)). Die höherpriore Nachricht, die sie aus diesem Zustand "befreien" kann, wird von der Äquivalenzklasse k geschickt. Somit kommt die Äquivalenzklasse k zum Zuge bevor die Äquivalenzklasse k+1 zum zweiten Mal senden kann. Wenn diese Argumentation auf die Äquivalenzklasse k+1 angewendet wird, heißt dies, dass die Äquivalenzklasse k+2 höchstens zweimal senden kann, bevor die Äquivalenzklasse k sendet. Ausgehend von einer Priorität (k, 0) kann somit die Äquivalenzklasse k+i höchstens i-mal senden, bevor die Äquivalenzklasse k sendet. Wenn man nun von einer Priorität (0, -k) ausgeht, gilt genau die gleiche Betrachtung für die höchst priore Nachricht, die die Transformation von (0, -k) zu (k, 0) erzeugt. Anschließend muss abgewartet werden, bis die Priorität (k, 0) die höchste ist. Im Worst-Case kann also jede Äquivalenzklasse k+i zwei-i-mal senden und eine beliebige Äquivalenzklasse, die kleiner als k ist, kann einmal senden, bevor die Äquivalenzklasse k senden kann. Als Ergebnis erhält man für die längste Latenzzeit die Anzahl von dazwischen liegenden Nachrichten und damit die längste Periode:

**Tabelle 4 maximale Latenzzeit und maximale Periode**

| Äquivalenzklasse | Worst-Case Latenzzeit | Worst-Case Periode |
|---|---|---|
| n-i | 2ⁱ-l | 2ⁱ |

Wenn alle Teilnehner 2,3, 4 immer senden wollen, stellt sich nach kurzer Zeit (spätestens nachdem die niedrige Äquivalenzklasse einmal gesendet hat) auf der Äquivalenzklassen-Ebene ein periodisches Muster ein. Dieses Muster hat immer die Form n, n-1, n, n-2, n, n-1, n, n-3, .... Die Periode der höchsten Äquivalenzklasse mit der Nummer n ist 2, die der zweithöchsten Äquivalenzklasse 4, ..., die der (n-i)-ten Äquivalenzklasse ist 2ⁱ⁺¹, ... und die der letzten beiden Äquivalenzklassen 2 und 1 ist 2ⁿ⁻¹ bzw. 2ⁿ. Die Perioden sind als Anzahl von Nachrichten angegeben. Damit erhalten alle Äquivalenzklassen periodisch Zugriff auf das Bussystem 5.

Innerhalb einer Äquivalenzklasse verläuft dann alles zyklisch und insgesamt ergibt sich für eine Nachricht die Periode (Periode der Äquivalenzklasse) x (Anzahl der Nachrichten in der Äquivalenzklasse).

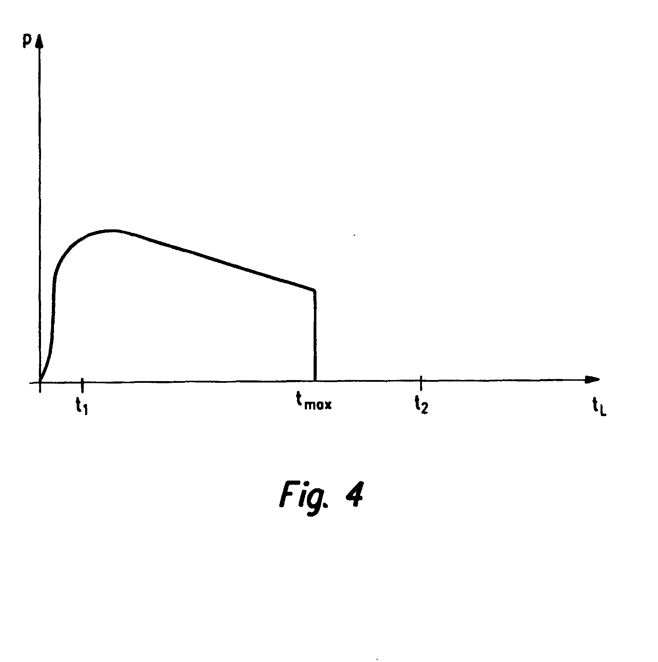

In Fig. 4 ist eine Wahrscheinlichkeitsverteilung der Latenzzeiten in dem erfindungsgemäßen Kommunikationssystem 1 dargestellt. Dabei wird von einem Kommunikationssystem 1 ausgegangen, in dem keine Sendepflicht herrscht. Es ist zu erkennen, dass die Wahrscheinlichkeitsverteilung bei kleinen Latenzzeiten t kleiner t₁ zwar keinen so großen Peek wie ein ereignisgesteuertes Kommunikationssystem (vgl. Fig. 2) aufweist. Die Verteilung des erfindungsgemäßen Kommunikationssystems 1 weist aber einen wesentlich höheren Wert auf, als die Wahrscheinlichkeitsverteilung für kurze Latenzzeiten t kleiner t₁ eines deterministischen Systems (vgl. Fig. 3). Für längere Latenzzeiten t größer t₁ weist das erfindungsgemäße Verfahren eine wesentlich höhere Wahrscheinlichkeit p auf als das ereignisgesteuerte System. Außerdem kann für die Nachrichten eine maximale Latenzzeit tₘₐₓ gewährleistet werden.

Wenn man von einem erfindungsgemäßen, Kommunikationssystem 1 bei dem alle Teinehmer immer senden wollen ausgeht, ergibt sich qualitativ eine Wahrscheinlichkeitsverteilung wie bei einem deterministischen Kommunikationssystem (vgl. Fig. 3). Gegenüber dem deterministischen Kommunikationssystem hat das erfindungsgemäße Kommunikationssystem 1 jedoch den Vorteil, dass es wesentlich flexibler ist.

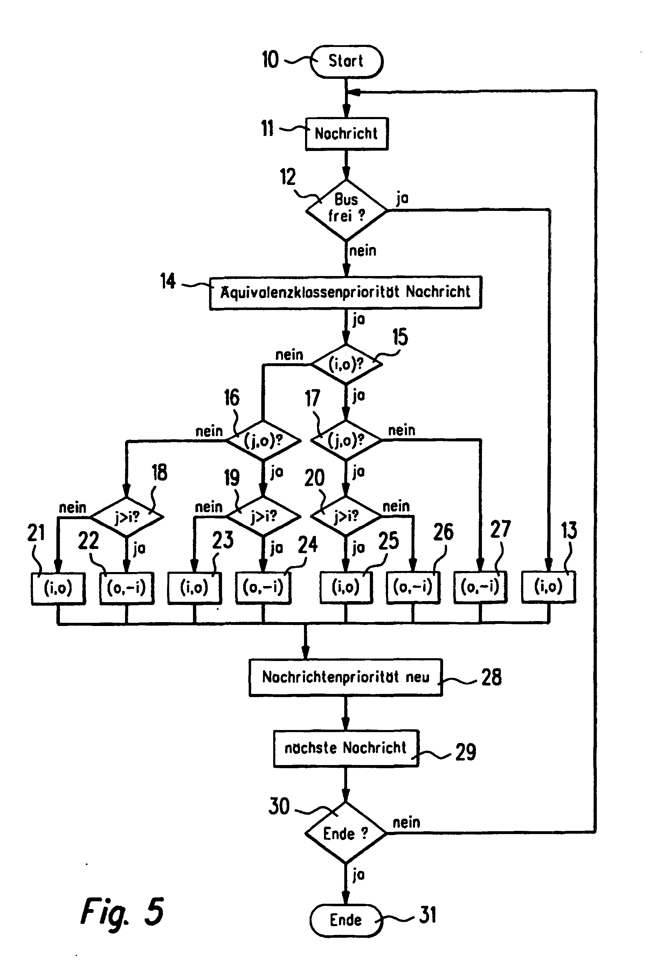

In Fig. 5 ist ein Ablaufdiagramm eines erfindungsgemäßen Verfahrens gemäß einer bevorzugten Ausführungsform dargestellt. Das erfindungsgemäße Verfahren beginnt in einem Funktionsblock 10. Anschließend wird in einem Funktionsblock 11 diejenige Nachricht über das Bussystem 5 übertragen, die in der Äquivalenzklasse mit der höchsten ÄK-Priorität enthalten ist und innerhalb dieser Äquivalenzklasse die höchste Nachrichtenpriorität aufweist. In einem Abfrageblock 12 wird dann überprüft, ob keine Nachricht über das Bussystem 5 übertragen wird, obwohl das Bussystem 5 frei ist. Falls dem so ist, wird zu einem Funktionsblock 13 verzweigt, wo die Priorität der aktuellen Äquivalenzklasse auf (i, 0) gesetzt wird.

Falls eine Nachricht über das Bussystem 5 übertragen wurde, wird in einem Funktionsblock 14 die Priorität dieser Nachricht gelesen. Anschließend werden eine Reihe von Abfrageblöcken 15 bis 20 durchlaufen, um in Abhängigkeit von der Priorität der Äquivalenzklasse i und der Priorität der auf dem Bussystem 5 übertragenen Nachricht j zu einem entsprechenden Funktionsblock 21 bis 27 zu verzweigen und der aktuellen Äquivalenzklasse die entsprechende ÄK-Priorität zuzuordnen.

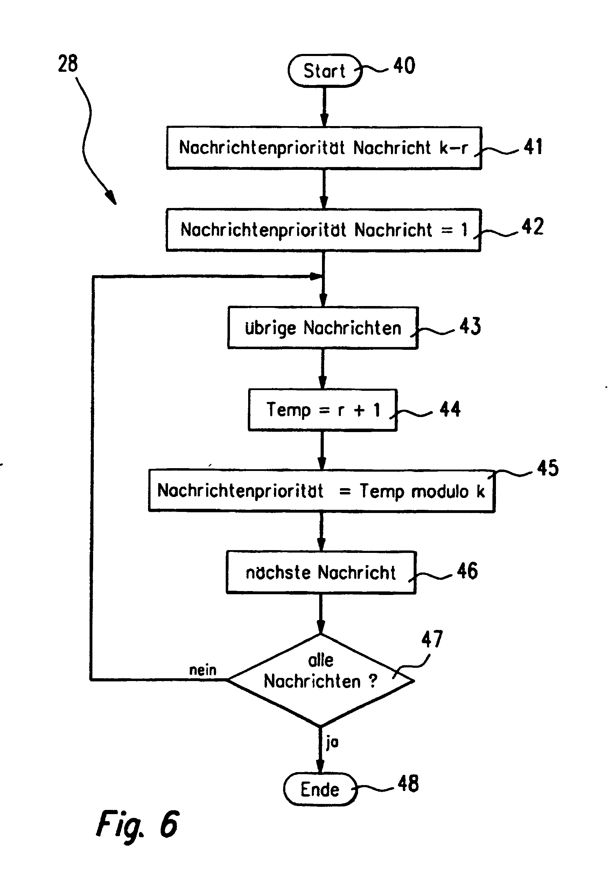

In einem Funktionsblock 28 werden dann die Nachrichtenprioritäten der in der aktuellen Äquivalenzklasse enthaltenen Nachrichten nach einem in Fig. 6 beschriebenen Verfahren verändert. In einem Funktionsblock 29 wird dann die nächste höchstpriore Nachricht ausgewählt. In einem Abfrageblock 30 wird überprüft, ob das Verfahren beendet werden soll. Falls nein, wird die in dem Funktionsblock 29 ausgewählte Nachricht in den Funktionsblock 11 auf das Bussystem 5 übertragen und das Verfahren beginnt von vorne. Falls das Verfahren beendet werden soll, wird zu dem Ende des Verfahrens in Funktionsblock 31 verzweigt.

Das Verfahren zur dynamischen Veränderung der Nachrichtenpriorität in der Äquivalenzklasse, aus der eine Nachricht gesendet wurde, ist in Fig. 6 dargestellt. Das Verfahren beginnt in einem Funktionsblock 40. Anschließend wird in einem Funktionsblock 41 die Nachrichtenpriorität k-r der gesendeten Nachrichten ermittelt. In einem Funktionsblock 42 wird dann die Nachrichtenpriorität der gesendeten Nachricht auf den in der aktuellen Äquivalenzklasse niedrigstmöglichen Wert, im vorliegenden Fall auf 1, gesetzt.

Die Prioritäten der übrigen, nicht gesendeten Nachrichten der aktuellen Äquivalenzklasse werden in einer Programmschleife auf neue Werte gesetzt. In einem Funktionsblock 23 wird zunächst eine der übrigen Nachrichten ausgewählt. Danach wird in einem Funktionsblock 44 ein temporärer Wert Temp = r+1 gebildet. Der Wert r ergibt sich dabei aus der Differenz der Anzahl k der in der aktuellen Äquivalenzklasse maximal möglichen Prioritäten und der in dem Funktionsblock 41 ermittelten Nachrichtenpriorität der gesendeten Nachricht. In einem Funktionsblock 45 wird dann die Nachrichtenpriorität der in dem Funktionsblock 43 ausgewählten Nachricht aus Temp modulo k gebildet. In einem Funktionsblock 46 wird die nächste der übrigen Nachrichten ausgewählt. In einem Abfrageblock 47 wird dann überprüft, ob allen übrigen Nachrichten der aktuellen Äquivalenzklasse neue Nachrichtenprioritäten zugeordnet worden sind. Falls nein, wird wieder zu dem Funktionsblock 43 verzweigt und die Schleife noch einmal durchlaufen. Falls allen Nachrichten neue Nachrichtenprioritäten zugeordnet worden sind, wird das Verfahren in dem Funktionsblock 48 beendet.

## Patentansprüche

1. Verfahren zum Austausch von Daten zwischen mindestens zwei Teilnehmern (2, 3, 4), die mittels eines Bussystems (5) miteinander in Verbindung stehen, wobei die Daten in Nachrichten enthalten sind, die von den Teilnehmern (2, 3, 4) über das Bussystem (5) übertragen werden, und jeder Nachricht einer vorgebbare Priorität zugeordnet ist, wobei
- die Menge aller Nachrichten in Äquivalenzklassen unterteilt wird;
- jeder Äquivalenzklasse eine Priorität zugeordnet wird, die vorzugsweise der höchsten Priorität einer Nachricht der Äquivalenzklasse entspricht; und
- während des Betriebs des Bussystems (5) die Prioritäten der Äquivalenzklassen dynamisch verändert werden,
**dadurch gekennzeichnet, dass** die Prioritäten der Äquivalenzklassen nach dem Senden einer Nachricht zyklisch derart verändert werden, dass die Priorität einer Äquivalenzklasse verringert wird, falls eine Nachricht der Äquivalenzklasse gesendet wurde oder hätte gesendet werden können, die Priorität einer Äquivalenzklasse beibehalten wird, falls eine Nachricht der Äquivalenzklasse nicht hätte gesendet werden können, unabhängig davon, ob die Priorität der Äquivalenzklasse hoch oder tief war und die Priorität einer Äquivalenzklasse hochgesetzt wird, falls eine Nachricht der Äquivalenzklasse nur dann hätte gesendet werden können, wenn die Äquivalenzklasse die hohe Priorität gehabt hätte.

2. Verfahren nach Anspruch 1, **dadurch gekennzeichnet, dass**
- Die Menge aller Nachrichten in Äquivalenzklassen unterteilt wird; und
- Während des Betriebs des Bussystems (5) die Prioritäten der Nachrichten innerhalb der Äquivalenzklasse dynamisch verändert werden.

3. Verfahren nach Anspruch 2, **dadurch gekennzeichnet, dass** die Priorität der Nachrichten innerhalb einer Äquivalenzklasse nach dem Senden einer Nachricht zyklisch derart verändert wird, dass die Priorität einer gesendeten Nachricht innerhalb der Äquivalenzklasse nach dem Senden der Nachricht auf den innerhalb der Äquivalenzklasse niedrigst möglichen Prioritätswert gesetzt wird.

4. Verfahren nach Anspruch 2 oder 3, **dadurch gekennzeichnet, dass** die Priorität der nicht gesendeten Nachrichten innerhalb der Äquivalenzklasse nach dem Senden einer Nachricht derselben Äquivalenzklasse um einen Wert erhöht wird, der ermittelt wird aus einer Anzahl (k)der in der Äquivalenzklasse maximal möglichen Prioritäten minus der Priorität (k-r) der gesendeten Nachricht plus Eins, wobei das Ergebnis modulo Anzahl (k) der Prioritäten interpretiert wird.

5. Verfahren nach einem der Ansprüche 1, 3 oder 4, **dadurch gekennzeichnet, dass** während des Betriebs des Bussystems (5) die Prioritäten der Äquivalenzklassen nach dem folgenden Schema dynamisch verändert werden:
- Falls die Priorität einer Äquivalenzklasse (i, 0) ist und die ÄK Priorität einer gesendeten Nachricht (j, 0) ist, wird die Priorität (i, 0) der Äquivalenzklasse beibehalten, falls j > i ist, und die Priorität der Äquivalenzklasse auf (0, -i) verringert, falls j ≤ i ist.
- Falls die Priorität einer Äquivalenzklasse (i, 0) ist und die ÄK Priorität einer gesendeten Nachricht (0, -j) ist, wird die Priorität der Äquivalenzklasse immer auf (o, -i) verringert.
- Falls die Priorität einer Äquivalenzklasse (0, -i) ist und die ÄK Priorität einer gesendeten Nachricht (j, 0) ist, wird die Priorität (0, i-) der Äquivalenzklasse beibehalten, falls j > i ist, und die Priorität der Äquivalenzklasse auf (i, 0) erhöht, falls J ≤ i ist.
- Falls die Priorität einer Äquivalenzklasse (0, -i) ist und die ÄK Priorität einer gesendeten Nachricht (0, -j) ist, wird die Priorität (0, -i) der Äquivalenzklasse beibehalten, falls j ≥ i ist, und die Priorität der Äquivalenzklasse auf (i, 0) erhöht, falls j < i ist.
- Die Priorität der Äquivalenzklasse wird auf (i, 0) festgesetzt, falls keine Nachricht gesendet wird, obwohl der Systembus (5) frei ist.

6. Verfahren nach einem der Ansprüche 1, 3 oder 4, **dadurch gekennzeichnet, dass** die Prioritäten der Äquivalenzklassen nach dem Senden einer Nachricht zyklisch derart verändert werden, dass die Priorität der Äquivalenzklasse, aus der eine Nachricht gesendet wurde, nach dem Senden der Nachricht auf den niedrigst möglichen Prioritätswert gesetzt wird.

7. Verfahren nach einem der Ansprüche 1, 3, 4 oder 6, **dadurch gekennzeichnet, dass** die Priorität der Äquivalenzklassen, aus denen keine Nachricht gesendet wurde, nach dem Senden einer Nachricht um einen Wert erhöht werden, der ermittelt wird aus einer Anzahl (k) der in der Äquivalenzklasse maximal möglichen Prioritäten minus der Priorität (k-r) der gesendeten Nachricht plus Eins, wobei das Ergebnis modulo Anzahl (k) der Prioritäten interpretiert wird.

8. Kommunikationssystem (1) mit mindestens zwei Teilnehmern (2, 3, 4) und einem Bussystem (5), über das die Teilnehmer (2, 3, 4) miteinander in Verbindung stehen, zum Austausch von Daten zwischen den Teilnehmern (2, 3, 4), wobei die Daten in Nachrichten enthalten sind, die von den Teilnehmern (2, 3, 4) über das Bussystem (5) übertragbar sind, und jeder Nachricht eine vorgebbare Priorität zugeordnet ist, wobei das Kommunikationssystem (1) Mittel zur dynamischen Veränderung der den Nachrichten zugeordneten Prioritäten während des Betriebs des Bussystems (5) aufweist, die derart ausgestaltet sind, dass
die Menge aller Nachrichten in Äquivalenzklassen unterteilt wird,
jeder Äquivalenzklasse eine Priorität zugeordnet wird, die vorzugsweise der höchsten Priorität einer Nachricht in der Äquivalenzklasse entspricht
und während des Betriebs des Bussystems (5) die Prioritäten der
Äquivalenzklassen dynamisch verändert werden,
**dadurch gekennzeichnet, dass** die Mittel derart ausgestaltet sind, dass die Prioritäten der Äquivalenzklassen nach dem Senden einer Nachricht zyklisch derart verändert werden, dass die Priorität einer Äquivalenzklasse verringert wird, falls eine Nachricht der Äquivalenzklasse gesendet wurde oder hätte gesendet werden können, die Priorität einer Äquivalenzklasse beibehalten wird, falls eine Nachricht der Äquivalenazklasse nicht hätte gesendet werden können, unabhängig davon, ob die Priorität der Äquivalenzklasse hoch oder tief war und die Priorität einer Äquivalenzklasse hochgesetzt wird, falls eine Nachricht der Äquivalenzklasse nur dann hätte gesendet werden können, wenn die Äquivalenzklasse die hohe Priorität gehabt hätte.

9. Bussystem (5) zum Austausch von Daten zwischen mindestens zwei Teilnehmern (2, 3, 4) eines Kommunikationssystems (1), **dadurch gekennzeichnet, dass** mit dem Bussystem (5) ein Verfahren nach einem der Ansprüche 1 bis 7 ausgeführt wird.

10. Speicherelement (7), insbesondere Read-Only-Memory. Random-Access-Memory oder Flash-Memory, für einen Teilnehmer (2, 3, 4) eines Kommunikationssystems (1), der über ein Bussystem (5) zum Austausch von Daten mit mindestens einem weiteren Teilnehmer (2, 3, 4) in Verbindung steht, auf dem ein Computerprogramm abgespeichert ist, das auf einem Rechengerät des Teilnehmers, insbesondere auf einem Mikroprozessor (6), ablauffähig und zur Ausführung eines Verfahrens nach einem der Ansprüche 1 bis 7 geeignet ist.

11. Computerprogramm, **dadurch gekennzeichnet, dass** es zur Ausführung eines Verfahrens nach einem der Ansprüche 1 bis 7 geeignet ist, wenn es auf einem Rechengerät, insbesondere auf einem Mikroprozessor (6), eines Teilnehmers (2, 3, 4) eines Kommunikationssystems (1), der über ein Bussystem (5) zum Austausch von Daten mit mindestens einem weiteren Teilnehmer (2, 3, 4) in Verbindung steht, abläuft.

12. Computerprogramm nach Anspruch 11, **dadurch gekennzeichnet, dass** es auf einem Speicherelement (7), vorzugsweise auf einem Flash-Memory, abgespeichert ist.

## Revendications

1. Procédé d'échange de données entre au moins deux abonnés (2, 3, 4) qui sont en communication l'un avec l'autre au moyen d'un système de bus (5), les données étant contenues dans des messages transmis par les abonnés (2, 3, 4) par le système de bus (5) avec une priorité prédéterminée associée à chaque message, et selon laquelle
- l'ensemble de tous les messages est divisé en classes d'équivalence ;
- une priorité qui correspond de préférence à la plus haute priorité d'un message de la classe d'équivalence est associée à chaque classe d'équivalence, et
- les priorités des classes d'équivalence sont modifiées dynamiquement pendant le fonctionnement du système de bus (5),
**caractérisé en ce qu'**
après l'envoi d'un message, les priorités des classes d'équivalence sont modifiées cycliquement pour réduire la priorité d'une classe d'équivalence si un message de la classe d'équivalence a été envoyé ou avait pu être envoyé, pour conserver la priorité d'une classe d'équivalence si un message de la classe d'équivalence n'avait pas pu être envoyé, indépendamment du fait que la priorité de la classe d'équivalence a été haute ou basse, et pour augmenter la priorité d'une classe d'équivalence dans le cas où un message de la classe d'équivalence n'a pu être envoyé que si la classe d'équivalence avait la haute priorité.

2. Procédé selon la revendication 1,
**caractérisé en ce que**
- l'ensemble de tous les messages est divisé en classes d'équivalence ; et
- les priorités de messages à l'intérieur de la classe d'équivalence sont modifiées dynamiquement pendant le fonctionnement du système de bus (5).

3. Procédé selon la revendication 2,
**caractérisé en ce qu'**
après l'envoi d'un message, la priorité des messages à l'intérieur d'une classe d'équivalence sont modifiées cycliquement pour placer la priorité d'un message envoyé à l'intérieur de la classe d'équivalence, après l'envoi du message, sur la valeur de priorité la plus basse possible à l'intérieur de la classe d'équivalence.

4. Procédé selon la revendication 2 ou 3,
**caractérisé en ce que**
la priorité des messages non envoyés à l'intérieur de la classe d'équivalence, après l'envoi d'un message de la même classe d'équivalence, est augmentée d'une valeur qui est déterminée à partir d'un nombre (k) des priorités maximales possibles dans la classe d'équivalence moins la priorité (k-r) du message envoyé plus Un, le résultat étant interprété comme le nombre modulo (k) des priorités.

5. Procédé selon l'une quelconque des revendications 1, 3 ou 4,
**caractérisé en ce que**
pendant le fonctionnement du système de bus (5) les priorités des classes d'équivalence sont modifiées dynamiquement selon le schéma suivant :
- si la priorité d'une classe d'équivalence est (i, 0) et ÄK la priorité d'un message envoyé (j, 0), on conserve la priorité (i, 0) de la classe d'équivalence si j > i et on réduit la priorité de la classe d'équivalence à (0, -i) si j ≤ i,
- si la priorité d'une classe d'équivalence est (i, 0) et ÂK la priorité d'un message envoyé (0, -j), on réduit toujours la priorité de la classe d'équivalence à (0, -i),
- si la priorité d'une classe d'équivalence est (0, -i) et ÄK la priorité d'un message envoyé (j, 0), on conserve la priorité (0,-i) de la classe d'équivalence si j > i et on augmente la priorité de la classe d'équivalence à (i, 0) si j ≤ i,
- si la priorité d'une classe d'équivalence est (0, -i) et ÄK la priorité d'un message envoyé (0, -j), on conserve la priorité (0, -i) de la classe d'équivalence si j ≥ i et on augmente la priorité de la classe d'équivalence à (i, 0) si j < i,
- on fixe la priorité de la classe d'équivalence à (i, 0) si aucun message n'est envoyé bien que le système de bus (5) soit libre.

6. Procédé selon l'une quelconque des revendications 1, 3 ou 4,
**caractérisé en ce qu'**
après l'envoi d'un message les priorités des classes d'équivalence sont modifiées cycliquement pour placer, après l'envoi du message, la priorité de la classe d'équivalence de laquelle un message a été envoyé sur la valeur de priorité la plus basse possible.

7. Procédé selon l'une quelconque des revendications 1, 3, 4 ou 6,
**caractérisé en ce que**
la priorité des classes d'équivalence desquelles aucun message n'a été envoyé est augmentée, après l'envoi d'un message, d'une valeur qui est déterminée à partir d'un nombre (k) des priorités maximales possibles dans la classe d'équivalence moins la priorité (k-r) du message envoyé plus un, le résultat étant interprété comme le nombre modulo (k) des priorités.

8. Système de communication (1) avec au moins deux abonnés (2, 3, 4) et un système de bus (5) par lequel les abonnés (2, 3, 4) sont en communication l'un avec l'autre pour l'échange de données entre les abonnés (2, 3, 4), les données étant contenues dans des messages transmis par les abonnés (2, 3, 4) par le système de bus (5) avec une priorité prédéterminée associée à chaque message, le système de communication (1) présentant des moyens pour la modification dynamique des priorités associées aux messages pendant le fonctionnement du système de bus (5), moyens conçus pour
- diviser la l'ensemble de tous les messages en classes d'équivalence ;
- associer à chaque classe d'équivalence une priorité qui correspond de préférence à la plus haute priorité d'un message de la classe d'équivalence ; et
- modifier dynamiquement les priorités des classes d'équivalence pendant le fonctionnement du système de bus (5),
**caractérisé en ce que**
les moyens sont conçus pour modifier cycliquement les priorités des classes d'équivalence après l'envoi d'un message pour réduire la priorité d'une classe d'équivalence si un message de la classe d'équivalence a été envoyé ou avait pu être envoyé, pour conserver la priorité d'une classe d'équivalence si un message de la classe d'équivalence n'avait pas pu être envoyé, indépendamment du fait que la priorité de la classe d'équivalence était haute ou basse, et pour augmenter la priorité d'une classe d'équivalence dans le cas où un message de la classe d'équivalence n'a pu être envoyé que si la classe d'équivalence avait la haute priorité.

9. Système de bus (5) pour l'échange de données entre au moins deux abonnés (2, 3, 4) d'un système de communication (1),
**caractérisé en ce que**
le système de bus (5) réalise un procédé selon l'une quelconque des revendications 1 à 7.

10. Mémoire (7), en particulier mémoire morte, mémoire vive ou mémoire flash, pour un abonné (2, 3, 4) d'un système de communication (1) qui par un système de bus (5), est en communication avec au moins un autre abonné (2, 3, 4) pour échanger des données, la mémoire contenant un programme informatique exécutable par un calculateur de l'abonné, en particulier un microprocesseur, et approprié pour réaliser un procédé selon l'une quelconque des revendications 1 à 7.

11. Programme informatique,
**caractérisé en ce qu'**
il est approprié pour réaliser un procédé selon l'une quelconque des revendications 1 à 7 s'il est exécuté par un calculateur, en particulier un microprocesseur (6), d'un abonné (2, 3, 4) d'un système de communication (1) qui, par un système de bus (5), est en communication avec au moins un autre abonné (2, 3, 4) pour échanger des données.

12. Programme informatique selon la revendication 11,
**caractérisé en ce qu'**
il est stocké dans une mémoire (7), de préférence une mémoire flash.

## Claims

1. Method for exchanging data between at least two users (2, 3, 4) interconnected by means of a bus system (5), the data being contained in messages which are transmitted by the users (2, 3, 4) via the bus system (5), and each message being assigned a prescribable priority,
- the set of all messages being subdivided into equivalence classes;
- each equivalence class being assigned a priority which preferably corresponds to the highest priority of a message of the equivalence class; and
- the priorities of the equivalence classes being varied dynamically during operation of the bus system (5),
**characterized in that** the priorities of the equivalence classes are varied cyclically after the sending of a message in such a way that the priority of an equivalence class is reduced if a message of the equivalence class has been or could have been sent, the priority of an equivalence class is maintained if a message of the equivalence class could not have been sent, irrespective of whether the priority of the equivalence class was high or low, and the priority of an equivalence class is raised if a message of the equivalence class could have been sent only if the equivalence class had had the high priority.

2. Method according to Claim 1, **characterized in that**
- the set of all the messages is subdivided into equivalence classes; and
- the priorities of the messages are varied dynamically within the equivalence class during operation of the bus system (5).

3. Method according to Claim 2, **characterized in that** the priority of the messages within an equivalence class is varied cyclically after the sending of a message in such a way that the priority of a sent message within the equivalence class is set to the lowest possible priority value within the equivalence class after the sending of the message.

4. Method according to Claim 2 or 3, **characterized in that** the priority of the unsent messages within the equivalence class is raised after the sending of a message of the same equivalence class by a value which is determined from a number (k) of the maximum possible priorities in the equivalence class minus the priority (k-r) of the sent message plus one, the result being interpreted as modulo number (k) of the priorities.

5. Method according to one of Claims 1, 3 or 4,
**characterized in that** the priorities of the equivalence classes are varied dynamically in accordance with the following scheme during operation of the bus system (5) :
- if the priority of an equivalence class (i, 0) and the EC priority of a sent message is (j, 0), the priority (i, 0) of the equivalence class is maintained if j > i, and the priority of the equivalence class is reduced to (0, -i) if j ≤i.
- if the priority of an equivalence class is (i, 0) and the EC priority of a sent message is (0, -j), the priority of the equivalence class is always reduced to (0, -i).
- if the priority of an equivalence class is (0, -i) and the EC priority of a sent message is (j, 0), the priority (0, -i) of the equivalence class is maintained if j > i, and the priority of the equivalence class is raised to (i, 0) if j ≤ i.
- if the priority of an equivalence class is (0, -i) and the EC priority of a sent message is (0, -j), the priority (0, -i) of the equivalence class is maintained if j ≥ i, and the priority of the equivalence class is raised to (i, 0) if j < i.
- the priority of the equivalence class is fixed at (i, 0) if no message is sent, although the system bus (5) is free.

6. Method according to one of Claims 1, 3 or 4, **characterized in that** the priorities of the equivalence classes are varied cyclically after the sending of a message in such a way that the priority of the equivalence class from which a message has been sent is set to the lowest possible priority value after the sending of the message.

7. Method according to one of Claims 1, 3, 4 or 6, **characterized in that** the priority of the equivalence classes from which no message has been sent is raised after the sending of a message by a value which is determined from a number (k) of the maximum possible priorities in the equivalence class minus the priority (k-r) of the sent message plus one, the result being interpreted as modulo number (k) of the priorities.

8. Communication system (1) having at least two users (2, 3, 4) and a bus system (5) via which the users (2, 3, 4) are interconnected, for exchanging data between the users (2, 3, 4), the data being contained in messages which can be transmitted by the users (2, 3, 4) via the bus system (5), and each message being assigned a prescribable priority, the communication system (1) having means for dynamically changing the priorities assigned to the messages during operation of the bus system (5), said means being configured in such a way that
the set of all messages is subdivided into equivalence classes, each equivalence class is assigned a priority which preferably corresponds to the highest priority of a message in the equivalence class and the priorities of the equivalence classes are varied dynamically during operation of the bus system (5),
**characterized in that** the means are configured in such a way that the priorities of the equivalence classes are varied cyclically after the sending of a message in such a way that the priority of an equivalence class is reduced if a message of the equivalence class has been or could have been sent, the priority of an equivalence class is maintained if a message of the equivalence class could not have been sent, irrespective of whether the priority of the equivalence class was high or low, and the priority of an equivalence class is raised if a message of the equivalence class could have been sent only if the equivalence class had had the high priority.

9. Bus system (5) for exchanging data between at least two users (2, 3, 4) of a communication system (1), **characterized in that** a method according to one of Claims 1 to 7 is executed with the aid of the bus system (5).

10. Memory element (7), in particular a read only memory, random access memory or flash memory, for a user (2, 3, 4) of a communication system (1), which is connected to at least one further user (2, 3, 4) via a bus system (5) for exchanging data, on which there is stored a computer program which can run on a computing element of the user, in particular on a microprocessor (6), and is suitable for executing a method according to one of Claims 1 to 7.

11. Computer program, **characterized in that** it is suitable for executing a method according to one of Claims 1 to 7 when it is run on a computing element, in particular on a microprocessor (6), of a user (2, 3, 4) of a communication system (1) which is connected to at least one further user (2, 3, 4) via a bus system (5) for exchanging data.

12. Computer program according to Claim 11,
**characterized in that** it is stored on a memory element (7), preferably on a flash memory.
